# EUROPEAN PATENT SPECIFICATION

(11) **EP 4 339 525 B1**
(45) Date of publication and mention of the grant of the patent: **29.04.2026**
(21) Application number: 22810522.7
(22) Date of filing: 23.05.2022
(51) Int. Cl.: F25B 49/02, F25B 49/00, F24F 11/36, F24F 11/49, F24F 11/52

(54) **REFRIGERANT LEAKAGE DETECTION METHOD AND DEVICE, AIR CONDITIONER AND COMPUTER-READABLE STORAGE MEDIUM**
KÄLTEMITTELLECKDETEKTIONSVERFAHREN UND -VORRICHTUNG SOWIE KLIMAANLAGE UND COMPUTERLESBARES SPEICHERMEDIUM
PROCÉDÉ ET APPAREIL DE DÉTECTION DE FUITE DE FLUIDE FRIGORIGÈNE, CLIMATISEUR ET SUPPORT DE STOCKAGE LISIBLE PAR ORDINATEUR

(30) Priority: 27.05.2021 CN 202110589153
(43) Date of publication of application: 20.03.2024
(73) Proprietor: Midea Group Co., Ltd., Foshan, Guangdong 528311 (CN); GD Midea Air-Conditioning Equipment Co., Ltd., Foshan, Guangdong 528311 (CN)
(72) Inventor: XIAO, Jiumin, Foshan, Guangdong 528311 (CN); HUANG, Yancong, Foshan, Guangdong 528311 (CN); XIAO, Yang, Foshan, Guangdong 528311 (CN); LIANG, Huifeng, Foshan, Guangdong 528311 (CN); SHAO, Yanpo, Foshan, Guangdong 528311 (CN)
(74) Representative: RGTH
(86) International application number: PCT/CN2022/094504
(87) International publication number: WO 2022/247797

(56) References cited:
- WO-A1-2017/219230
- CN-A- 105 928 156
- CN-A- 106 152 428
- CN-A- 110 873 434
- CN-A- 110 873 434
- CN-A- 110 887 165
- CN-A- 110 895 024
- CN-A- 111 928 448
- JP-A- 2017 020 688
- US-A1- 2019 316 800

## Description

### TECHNICAL FIELD

The present invention relates to the technical field of an air conditioner, and in particular to a refrigerant leakage detection method, a refrigerant leakage detection device, an air conditioner and a storage medium. JP 2017 020688 A discloses a refrigerant leak detection method according to the preamble of independent claim 1, and provides a heat pump type water heater that can detect leakage of a refrigerant by using a simple configuration.

### BACKGROUND

At present, two types of detection methods are generally used to detect refrigerant leakage in air conditioners. One type is to add a certain component to a refrigerant/ refrigerating fluid and detect the concentration of this component to determine whether the refrigerant is leaking. The other type is to detect parameters such as exhaust, return air and pressure after a certain period of operation to determine whether there is refrigerant leakage.

However, when the two detection methods are used to detect the refrigerant, adding components to the refrigerant can affect heat transfer characteristics and specialized equipment is required for detection, which is costly. If the parameters such as exhaust, return air, and pressure are detected and can fluctuate with various frequency limiting values triggered after the refrigerant leakage, and this fluctuation period is uncertain, thereby affecting the detection accuracy of the refrigerant leakage.

### SUMMARY

The present invention provides a refrigerant leakage detection method, a refrigerant leakage detection device, an air conditioner and a storage medium, aiming to solve the technical problem that the operating parameters of the air conditioner can fluctuate with various frequency limiting values triggered after refrigerant leakage, thereby affecting the detection accuracy of the refrigerant leakage.

In order to achieve the above purpose, the present invention provides a refrigerant leakage detection method according to independent claim 1, comprising:
(51) acquiring an exhaust temperature and a target operating exhaust parameter of an air conditioner;
(S2) determining whether the acquired exhaust temperature of the air conditioner exceeds a preset exhaust temperature and whether the target operating exhaust parameter of the air conditioner exceeds a preset range of an exhaust parameter of refrigerant leakage;(S3) in response to the result of step S2 being positive: acquiring the exhaust temperature of the air conditioner at various moments during a preset time period;
(S4) continuing to acquire the exhaust temperature until at least two extreme values of the exhaust temperature and exhaust moments corresponding to these at least two extreme values of the exhaust temperature of the air conditioner based on the exhaust temperature at the various moments have been determined;(5S) acquiring an exhaust period of the air conditioner as time difference values between the at least two exhaust moments; and (S6) determining whether there is a refrigerant leakage in the air conditioner based on the exhaust period.

Preferred embodiments of the refrigerant leakage detection method according to independent claim 1 are defined in dependent claims 2-8.

In order to achieve the above objective, the present invention further provides the refrigerant leakage detection device according to independent claim 9.

In addition, in order to achieve the above objective, the present invention further provides an air conditioner, according to dependent claim 10, comprising a refrigerant leakage detection device according to independent claim 9 which comprises a processor, a memory and a refrigerant leakage detection program stored in the memory, the steps of the refrigerant leakage detection method as described above are implemented when the refrigerant leakage detection program is executed by the processor.

In addition, in order to achieve the above objective, the present invention further provides a computer-readable storage medium according to independent claim 11.

Compared with the existing technology, the present invention provides a refrigerant leakage detection method according to independent claim 1. Therefore, an accurate exhaust period is obtained by determining the at least two extreme values of the exhaust temperature and the exhaust moment corresponding to the at least two extreme values of the exhaust temperature of the air conditioner, thereby reducing false alarms of refrigerant leakage based on the accurate exhaust period and improving the detection accuracy of refrigerant leakage.

### BRIEF DESCRIPTION OF THE DRAWINGS

FIG. 1 is a schematic diagram of a hardware structure of an air conditioner according to various embodiments of the present invention.
FIG. 2 is a schematic flowchart of a refrigerant leakage detection method according to a first embodiment of the present invention.
FIG. 3 is another schematic flowchart of the refrigerant leakage detection method according to the first embodiment of the present invention.
FIG. 4 is a schematic flowchart of the refrigerant leakage detection method according to a second embodiment of the present invention.
FIG. 5 is a schematic flowchart of the refrigerant leakage detection method according to a third embodiment of the present invention.
FIG. 6 is a schematic diagram of functional modules of a refrigerant leakage detection device according to an embodiment of the present invention.

The realization of the purpose, functional features and advantages of the present invention will be further described in conjunction with the embodiments and with reference to the accompanying drawings.

### DETAILED DESCRIPTION OF THE EMBODIMENTS

It should be understood that the specific embodiments described here are only used to explain the present invention, and are not intended to limit the present invention which is defined by the appended claims.

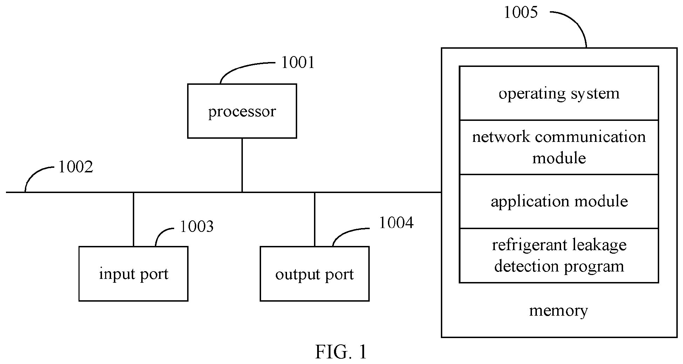

As shown in FIG. 1, FIG. 1 is a schematic diagram of a hardware structure of an air conditioner according to various embodiments of the present invention. In the embodiments of the present invention, the air conditioner may comprise a processor 1001 (such as a central processing unit, CPU), a communication bus 1002, an input port 1003, an output port 1004 and a memory 1005. The communication bus 1002 is used to realize connection communication between these components, the input port 1003 is used for data input, the output port 1004 is used for data output, and the memory 1005 can be a high-speed Random Access Memory (RAM) memory or a stable memory, such as disk memory. Alternatively, the memory 1005 may also be a storage device independent of the foregoing processor 1001. Those skilled in the art can understand that the hardware structure shown in FIG. 1 does not limit the present invention which is defined by the appended claims, and may comprise more or fewer components than shown, or a combination of certain components, or differently arranged components.

As shown in FIG. 1, the memory 1005 as a readable storage medium in FIG. 1 may comprise an operating system, a network communication module, an application module, and a refrigerant leakage detection program. In a terminal shown in FIG. 1, the network port 1004 is mainly used to connect to a back-end server and perform data communication with the back-end server, the user port 1003 is mainly used to connect to an client (user side) and perform the data communication with the client, and the processor 1001 can be used to call the refrigerant leakage detection program stored in the memory 1005.

In this embodiment, the refrigerant leakage detection device comprises: the memory 1005, the processor 1001, and the refrigerant leakage detection program stored on the memory 1005 and executable on the processor 1001. When the processor 1001 calls the refrigerant leakage detection program stored in the memory 1005, the following steps are performed:
acquiring an exhaust temperature of the air conditioner at various moments during a preset time period, in response to the exhaust temperature of the air conditioner being greater than a preset exhaust temperature and a target operating exhaust parameter of the air conditioner exceeding a preset range of the exhaust parameter of the refrigerant leakage;
determining at least two extreme values of the exhaust temperature of the air conditioner and exhaust moments corresponding to the at least two extreme values of the exhaust temperature based on the exhaust temperature at various moments;
acquiring an exhaust period of the air conditioner based on the exhaust moment; and
determining whether there is refrigerant leakage in the air conditioner based on the exhaust period.

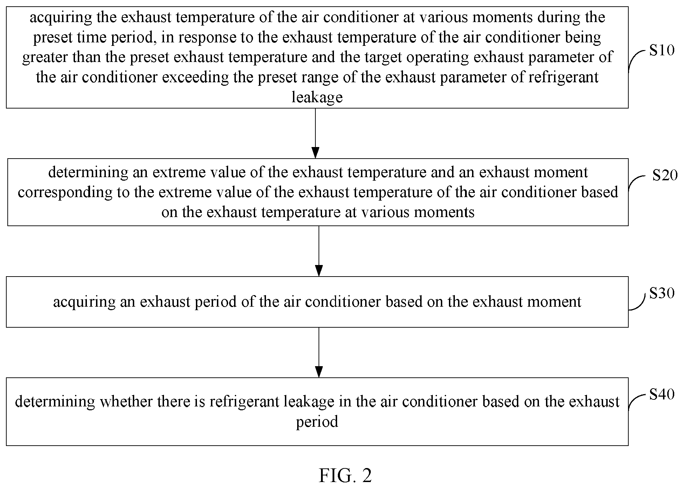

Based on the hardware structure shown in FIG. 1, the first embodiment of the present application provides the refrigerant leakage detection method. As shown in FIG. 2, FIG. 2 is a schematic flowchart of the refrigerant leakage detection method according to a first embodiment of the present application.

The embodiment of the present application provides an embodiment of the refrigerant leakage detection method. It should be noted that although the logical order is shown in the flowchart, in some cases, the steps shown or described may be performed in a different order than here.

Specifically, as shown in FIG. 2, the refrigerant leakage detection method in this embodiment comprises:
step S10, acquiring the exhaust temperature of the air conditioner at various moments during the preset time period, in response to the exhaust temperature of the air conditioner being greater than the preset exhaust temperature and the target operating exhaust parameter of the air conditioner exceeding the preset range of the exhaust parameter of refrigerant leakage.

Specifically, in this embodiment, the above-mentioned preset exhaust temperature refers to the temperature used to measure whether the exhaust temperature is abnormal during exhaust detection. The preset exhaust temperature can be a specific exhaust temperature threshold preset by a user. When it is detected that the current exhaust temperature exceeds the specific exhaust temperature threshold preset by the user, it indicates that the exhaust temperature of the air conditioner exceeds the exhaust temperature of the air conditioner during normal operation, and it is determined that the air conditioner needs to perform refrigerant leakage protection, for example, a refrigerant leakage protection module is automatically activated to perform the refrigerant leakage protection. In addition, due to different performance parameters of the air conditioner and operating conditions of the air conditioner under different operating parameters, adopting the specific exhaust temperature threshold may lead to inaccurate exhaust detection, which in turn affects inaccurate refrigerant leakage detection. Therefore, in this embodiment, it is possible to flexibly set the exhaust temperature threshold for the air conditioner based on the current operating parameters, thereby improving the accuracy of exhaust detection. The operating parameters can be any parameter such as compression ratio, refrigerant flow rate and electronic expansion valve opening that can affect the exhaust temperature and are not limited in this embodiment.

In addition, in order to avoid damage to a compressor of the air conditioner, in this embodiment, when it is detected that the exhaust temperature of the air conditioner is greater than the preset exhaust temperature, the operating state of the air conditioner is adjusted. Specifically, in this embodiment, the air conditioner is first controlled to shut down, after it is detected that the exhaust temperature of the air conditioner is within the normal range of the exhaust temperature, the air conditioner is controlled to start and run, thereby controlling the air conditioner to restart and run to avoid damage to the compressor of the air conditioner. While the air conditioner is controlled to start and run, outdoor and indoor fans of the air conditioner are controlled to run at the highest speed, thereby completing the adjustment of the operating state of the air conditioner.

Next, after the outdoor and indoor fans of the air conditioner run at the highest speed for a certain time period, the target operating exhaust parameters of the air conditioner operating in the adjusted operating state are acquired, thereby avoiding fluctuations in operating parameters such as exhaust temperature caused by unstable operation of the air conditioner in the early stage of restarting the air conditioner, which in turn leads to inaccurate detection results. In addition, it should be noted that in this embodiment, by adjusting the operating state of the air conditioner, the exhaust temperature of the air conditioner and the ambient temperature of the environment in which the air conditioner is located are driven to change. Only if it is detected that the target operating exhaust parameters exceed the preset range of the exhaust parameter of refrigerant leakage again after the exhaust temperature of the air conditioner and the ambient temperature of the environment in which the air conditioner is located have changed, it can be determined that there is refrigerant leakage in the air conditioner, thereby reducing the misjudgment rate of refrigerant leakage.

Furthermore, in this embodiment, when the target operating exhaust parameters of the air conditioner exceed the preset range of the exhaust parameter of refrigerant leakage, the exhaust temperature of the air conditioner at various moments during the preset time period is acquired, and the level of refrigerant leakage using the exhaust temperature at various moments is determined, thereby improving the accuracy of refrigerant leakage detection.

In addition, it should be noted that the above target operating exhaust parameters refer to the exhaust temperature of the compressor and the running current of the air conditioner. In this implementation, the exhaust temperature of the compressor and the running current of the air conditioner are detected to detect whether the air conditioner needs to trigger the refrigerant leakage detection function. In other words, in this embodiment, when it is detected that the exhaust temperature is greater than the exhaust temperature threshold and the running current is less than an running current threshold, that is, when the preset range of the exhaust parameter of refrigerant leakage is exceeded, it indicates that the air conditioner is operating abnormally, and it is determined that there is refrigerant leakage in the air conditioner, that is, the air conditioner needs to trigger the refrigerant leakage detection function; otherwise, it indicates that the air conditioner is operating normally, and it is determined that the air conditioner does not need to trigger the refrigerant leakage detection function.

When it is detected that the air conditioner needs to trigger the refrigerant leakage detection function, the preset refrigerant leakage detection process is executed, that is, the exhaust temperature at various moments during the preset time period is first acquired, and the preset refrigerant leakage detection process is completed based on the exhaust temperature at various moments.

In this embodiment, when acquiring the exhaust temperature at various moments, a timing acquisition method is adopted. The time can be started after it is detected that the above parameters exceed the preset range of the exhaust parameter of refrigerant leakage. In addition, the time can also be started after it is detected that the exhaust temperature is greater than the preset exhaust temperature. For example, after it is detected that the exhaust temperature is greater than the preset exhaust temperature, the exhaust temperature of the compressor and the running current of the air conditioner are detected every one second. After it is detected that the exhaust temperature is greater than the exhaust temperature threshold and the running current is less than the running current threshold, the refrigerant leakage detection function is triggered, and the current exhaust temperature of the air conditioner is continued to acquire. Accumulating the time continues, for example, the i-th second, and then sequentially acquiring the exhaust temperature at the (i+1)th second, (i+2)th second, and so on. The time interval for timing acquisition can be any time and is not limited in this embodiment.

Step S20, determining at least two extreme values of the exhaust temperature and exhaust moments corresponding to the at least two extreme values of the exhaust temperature of the air conditioner based on the exhaust temperature at various moments.

Step S30, acquiring an exhaust period of the air conditioner based on the exhaust moment.

Specifically, the above at least two extreme values of the exhaust temperature refers to the highest exhaust temperature or the lowest exhaust temperature during the exhaust temperature fluctuation period. For example, the exhaust temperature detected at the 152nd second is 123°C, and the exhaust temperature detected at the 153rd second is 124°C, 124°C is the highest exhaust temperature.

In this embodiment, after obtaining the exhaust temperature at various moments, the at least two extreme values of the exhaust temperature can be determined based on an exhaust difference value between the exhaust temperatures at two adjacent moments. For example, by determining the exhaust difference value between the exhaust temperature at the (i+1)th second and the exhaust temperature at the i-th second, it is possible to find the highest exhaust temperature or the lowest exhaust temperature and the exhaust moment corresponding to thereof. Specifically, after obtaining the exhaust temperature at various moments, if the exhaust difference value between the exhaust temperatures of two adjacent moments acquired for the first time is greater than zero, continue to acquire the exhaust difference value between the exhaust temperatures of the two subsequent adjacent moments until the exhaust difference value is equal to or less than zero, thus obtaining the highest exhaust temperature, and determining the exhaust moment corresponding to the highest exhaust temperature. If the exhaust difference value acquired for the first time is less than zero, continue to acquire the exhaust difference value between the exhaust temperatures at two subsequent adjacent moments until the exhaust difference value is equal to or greater than zero, thus obtaining the lowest exhaust temperature, and determining the exhaust moment corresponding to the lowest exhaust temperature.

For ease of understanding, here is an example of the above steps. For example, after the exhaust temperature detected at the 152nd second (152nd s) is 123°C and the exhaust temperature detected at the 153rd s is 124°C, the exhaust difference value between the 153rd s and the 152nd s is calculated as 1°C. Next, the exhaust temperature detected at the 154th s is 126°C, and the exhaust difference value between the 154th s and the 153rd s is calculated as 2°C. Next, the exhaust temperature detected at the 155th s is 125°C, and the exhaust difference value between the 155th s and the 154th s is calculated as (-1)°C, which means that the highest exhaust temperature during the fluctuation period of the exhaust temperature is 126°C, and the exhaust moment corresponding to thereof is 154th s.

In addition, it should be noted that according to the invention, it is necessary to acquire at least two highest exhaust temperatures or lowest exhaust temperatures to acquire the exhaust period. Here, the highest exhaust temperature is described as an example. When the exhaust difference value is acquired for the first time is greater than zero, continue to acquire the exhaust difference value between the exhaust temperatures at two subsequent adjacent moments until the exhaust difference value is equal to or less than zero, thereby obtaining a first highest exhaust temperature, and determining a first exhaust moment corresponding to the first highest exhaust temperature. Next, it continues to execute the above steps repeatedly, that is, after acquiring the first highest exhaust temperature, continue to acquire the exhaust difference value between the exhaust temperatures at the two subsequent adjacent moments until a second highest exhaust temperature is obtained based on the exhaust difference value, and a second exhaust moment corresponding to the second highest exhaust temperature is determined. In addition, it should be noted that the exhaust temperature is flexibly variable, thus the highest exhaust temperature and the lowest exhaust temperature in each exhaust period are not a fixed value. Therefore, in this embodiment, the temperature values of the first highest exhaust temperature and the second highest exhaust temperature may be the same, or may be different. Finally, a time difference value between the first exhaust moment and the second exhaust moment is calculated to obtain the exhaust period.

In addition, in this embodiment, in addition to determining the at least two extreme values of the exhaust temperature based on the exhaust difference values, an exhaust temperature trend curve of the air conditioner can also be generated based on the exhaust temperature at various moments, and the at least two extreme values of the exhaust temperature can be determined based on the exhaust temperature trend curve. Here is not described again in this embodiment.

Step S40: determining whether there is refrigerant leakage in the air conditioner based on the exhaust period.

According to the invention, the above exhaust period can be used to reduce false alarms of refrigerant leakage types, thereby improving the accuracy of the refrigerant leakage.

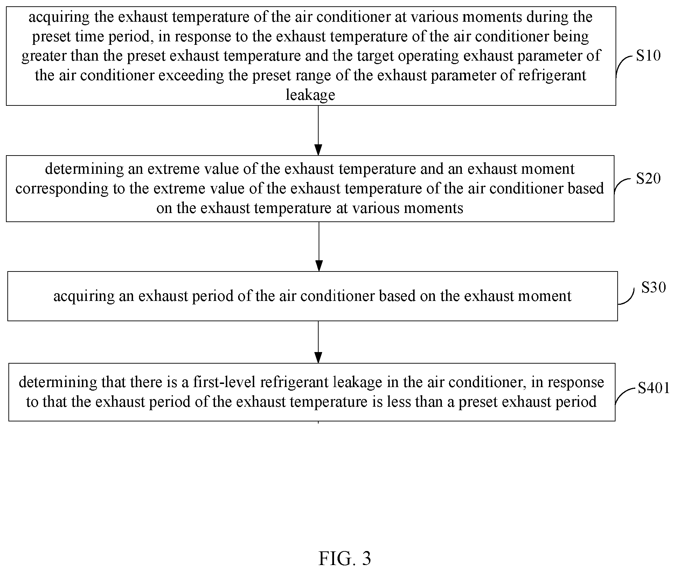

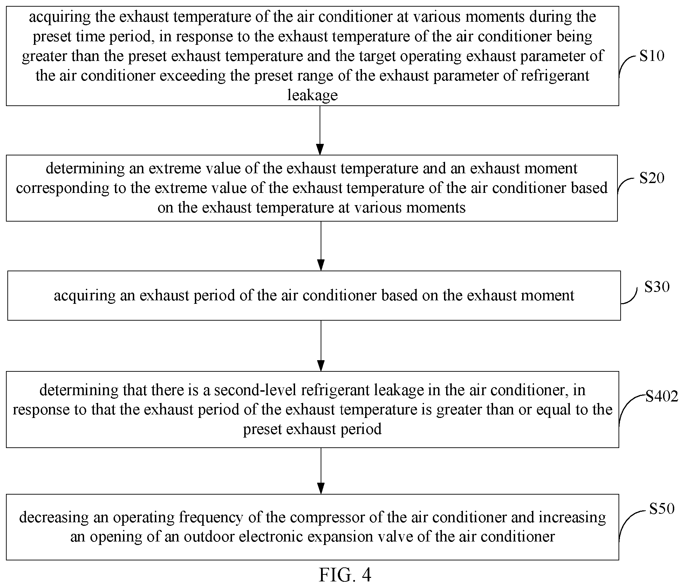

Specifically, as shown in FIG. 3, the above-mentioned step S40 in this embodiment also comprises:
step S401: determining that there is a first-level refrigerant leakage in the air conditioner, in response to the exhaust period of the exhaust temperature being shorter than a preset exhaust period; and
as shown in FIG. 4, the above-mentioned step S40 in this embodiment further comprises:
   step S402: determining that there is a second-level refrigerant leakage in the air conditioner, in response to the exhaust period of the exhaust temperature being longer than or equal to the preset exhaust period.

It should be noted that the second-level refrigerant leakage refers to the possible slight refrigerant leakage in the current air conditioner. Therefore, if there is the second-level refrigerant leakage in the air conditioner, the operating parameters of the air conditioner can be adjusted to enable the air conditioner to still have a certain cooling or heating effect, so as to not affect the normal use of the air conditioner. The first-level refrigerant leakage refers to there is a relatively serious refrigerant leakage in the current air conditioner and can affect the normal operation of the air conditioner. Therefore, if there is the first-level refrigerant leakage in the air conditioner, it is necessary to immediately control the compressor of the air conditioner to shut down so as to protect the compressor and other equipment. In addition, a refrigerant leakage prompt message can also be output to remind the user.

It should be understood that the above are only examples and do not constitute any limitation on the technical solution of the present invention, which is defined by the appended claims.

In this embodiment, according to the invention, after it is detected that the air conditioner needs to trigger the refrigerant leakage detection function, the exhaust temperature of the air conditioner at various moments is acquired to determine the at least two extreme values of the exhaust temperature of the air conditioner and the exhaust moment corresponding to thereof, thereby determining the exhaust period and detecting the refrigerant leakage based on the exhaust period. Therefore, the accurate exhaust period is obtained by determining the at least two extreme values of the exhaust temperature of the air conditioner and the exhaust moment corresponding to thereof, and it is possible to reduce the false alarms for refrigerant leakage based on the accurate exhaust period, thereby improving the detection accuracy of refrigerant leakage.

Furthermore, based on the refrigerant leakage detection method according to the first embodiment of the present invention, a refrigerant leakage detection method according to a second embodiment of the present invention is proposed.

As shown in FIG. 4, FIG. 4 is a schematic flow chart of the refrigerant leakage detection method according to the second embodiment of the present invention.

The difference between the second embodiment and the first embodiment is that after step S402, it also comprises:
step S50: decreasing an operating frequency of the compressor of the air conditioner and increasing an opening of an outdoor electronic expansion valve of the air conditioner.

In this embodiment, when the exhaust period of the air conditioner is detected to be relatively large, it indicates that the current refrigerant leakage is not too serious, that is, the current refrigerant leakage does not affect the normal operation of the air conditioner. Therefore, the operating parameters of the air conditioner can be adjusted to allow the air conditioner to still have a certain cooling or heating effect without affecting the normal use of the air conditioner.

It should be noted that in this embodiment, when the operating frequency of the air conditioner and the opening of the electronic expansion valve are adjusted, in order to reduce an operating load of the air conditioner, the operating frequency can be directly decreased to a first preset operating frequency, or the opening of the electronic expansion valve can be directly increased to a first preset opening.

In addition, in order to maintain the stability of an indoor temperature and avoid excessive adjustment of the operating frequency of the air conditioner and the opening of the electronic expansion valve, which can lead to excessive fluctuations in the indoor temperature and affect user comfort, in this embodiment, adjustment range for the operating frequency of the air conditioner and the opening of the electronic expansion valve can also be determined based on a temperature range of the current outdoor temperature. For example, the outdoor temperature is divided into three temperature ranges: a≤T<b, b≤T<c, c≤T≤d , where when a≤T<b, the adjustment range of the operating frequency is -f1 (i.e., decrease f1), and the adjustment range of the opening of the electronic expansion valve is P1 (i.e., increase P1); when b≤T<c, the adjustment range of the operating frequency is -f2, and the adjustment range of the opening of the electronic expansion valve is P2; when c≤T≤d, the adjustment range of the operating frequency is -f3, and the adjustment range of the opening of the electronic expansion valve is P3, where f1<f2<f3 and P1<P2<P3, that is, the higher the outdoor temperature, the greater the decrease in the operating frequency of the air conditioner, and the greater the increase in the opening of the electronic expansion valve.

In addition, it should be noted that in order to ensure the normal operation of the air conditioner, generally, the operating frequency of the air conditioner has a minimum limited operating frequency, and the opening of the electronic expansion valve has a maximum limited opening. Therefore, in this embodiment, during adjusting the operating frequency of the air conditioner and the opening of the electronic expansion valve, when the operating frequency after decreasing is lower than the minimum limited operating frequency, the air conditioner is controlled to operate at the minimum limited operating frequency; and when the opening of the electronic expansion valve after increasing is greater than the maximum limited opening, the air conditioner is controlled to run at the maximum limited opening.

In order to avoid not detecting the refrigerant leakage due to small fluctuations in parameters such as the exhaust temperature triggered in the early stage of refrigerant leakage, in this embodiment, after adjusting the operating frequency of the air conditioner and the opening of the electronic expansion valve, the air conditioner is controlled to restart and run. Specifically, in this embodiment, the air conditioner is first controlled to shut down, and after it is detected that the exhaust temperature of the air conditioner is within the normal range of the exhaust temperature, the air conditioner is controlled to start and run, and target operating exhaust parameters of the air conditioner are acquired. It should be noted that the above target operating exhaust parameters refer to the exhaust temperature of the compressor and a running current of the air conditioner. In this embodiment, the exhaust temperature of the compressor and the running current of the air conditioner are detected to detect whether there is a serious first-level refrigerant leakage in the air conditioner. When it is detected that the exhaust temperature is higher than an exhaust temperature threshold and the running current is lower than a running current threshold, that is, when the target operating exhaust parameters are beyond a preset parameter range for refrigerant leak detection, it is determined that there is a serious first-level refrigerant leak in the air conditioner. Therefore, in order to protect the compressor and other equipment of the air conditioner, the compressor of the air conditioner is controlled to stop, and a refrigerant leakage prompt message is output based on a display screen of the air conditioner to remind the user of the need for the air conditioner maintenance. On the contrary, when it is detected that the target operating exhaust parameters are not beyond the preset parameter range for refrigerant leakage detection, it is determined that there is no serious first-level refrigerant leak in the air conditioner at present, indicating that the refrigerant leakage does not significantly affect the normal operation of the air conditioner at present. Therefore, the operating parameters of the air conditioner can be adjusted to allow the air conditioner to still have a certain cooling or heating effect without affecting the normal use of the air conditioner. Specifically, in this embodiment, the operating frequency of the compressor of the air conditioner is decreased, and the opening of the outdoor electronic expansion valve of the air conditioner is increased.

It should be noted that in this embodiment, during adjusting the operating frequency of the air conditioner and the opening of the electronic expansion valve, in order to reduce the operating load of the air conditioner, the operating frequency can be directly decreased to a second preset operating frequency, or the opening of the electronic expansion valve can be increased directly increase to a second preset opening. The second operating frequency is lower than the above-mentioned first operating frequency, and the second opening is greater than the above-mentioned first opening.

In addition, in order to maintain the stability of the indoor temperature and avoid excessive adjustment of the operating frequency of the air conditioner and the opening of the electronic expansion valve, which can lead to excessive fluctuations in the indoor temperature and affect user comfort, in this embodiment, the adjustment range for the operating frequency of the air conditioner and the opening of the electronic expansion valve can also be determined based on the temperature range of the current outdoor temperature, which is not limited in this embodiment.

In this embodiment, when it is detected that the current refrigerant leakage is not too serious, that is, the current refrigerant leakage basically does not affect the normal operation of the air conditioner, the operating parameters of the air conditioner can be adjusted to allow the air conditioner to still have a certain cooling or heating function without affecting the normal use of the air conditioner.

Furthermore, based on the first embodiment of the detection method for the refrigerant leakage of the present invention, a third embodiment of the detection method for the refrigerant leakage of the present invention is proposed.

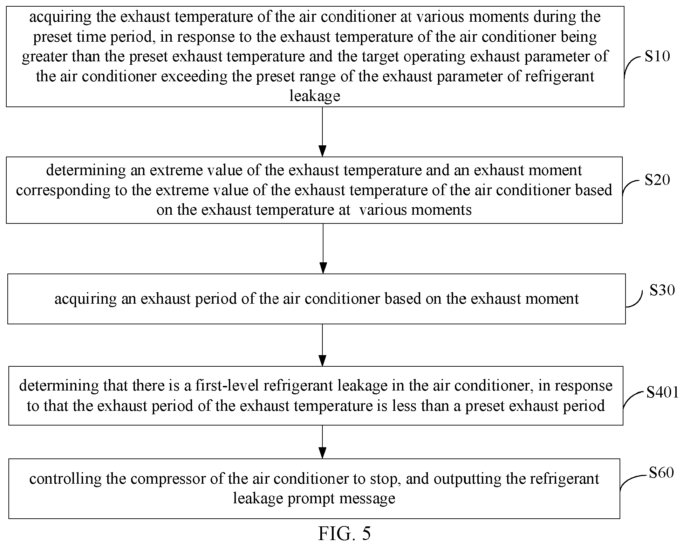

As shown in FIG. 5, FIG. 5 is a schematic flow chart of the refrigerant leakage detection method according to a third embodiment of the present invention.

The difference between the third embodiment and the first embodiment is that after step S401, it also comprises:
step S60: controlling the compressor of the air conditioner to stop, and outputting the refrigerant leakage prompt message.

In this embodiment, when it is detected that the exhaust period of the air conditioner is small, it indicates that the current refrigerant leakage is relatively serious. In order to protect the compressor and other equipment of the air conditioner, it is necessary to immediately control the compressor to stop running and output corresponding prompt messages based on the display screen of the air conditioner to remind the user of the need for the air conditioner maintenance.

In addition, in order to avoid damage to the compressor and other equipment of the air conditioner caused by the user restarting the air conditioner again, in this embodiment, a protection module of the air conditioner protection module is automatically started after the compressor is controlled to stop running. That is, before the refrigerant leakage of the air conditioner is repaired, when receiving the control command sent by the user, the operation corresponding to the control command is not executed, and the corresponding prompt message is output based on the display screen of the air conditioner again to prompt that the air conditioner is faulty and cannot operate normally.

In this embodiment, when a serious refrigerant leakage is detected, the compressor is immediately controlled to stop running to protect the compressor and other equipment of the air conditioner, and the corresponding prompt message is output based on the display screen of the air conditioner to prompt the user that the air conditioner needs to repair.

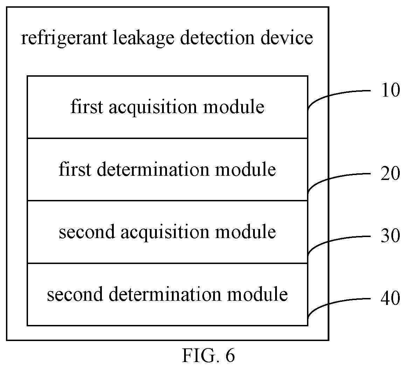

In addition, this embodiment also provides a detection device for the refrigerant leakage. As shown in FIG. 6, FIG. 6 is a schematic diagram of functional modules of the refrigerant leakage detection device according to an embodiment of the present invention.

Specifically, as shown in FIG. 6, the refrigerant leakage detection device comprises: a first acquisition module 10, a first determination module 20, a second acquisition module 30, and a second determination module 40.

The first acquisition module 10 is configured to acquire the exhaust temperature of the air conditioner at various moments during a preset time period, in response to the exhaust temperature of the air conditioner being greater than the preset exhaust temperature and the target operating exhaust parameter of the air conditioner exceeding the preset range of the exhaust parameters of the refrigerant leakage.

Specifically, in this embodiment, the above-mentioned preset exhaust temperature refers to the temperature used to measure whether the exhaust temperature is abnormal during exhaust detection, in which the preset exhaust temperature can be a specific exhaust temperature threshold preset by the user. When it is detected that the current exhaust temperature exceeds the specific exhaust temperature threshold preset by the user, it indicates that the exhaust temperature of the air conditioner exceeds the exhaust temperature of the air conditioner during normal operation, and it is determined that the air conditioner needs to be protected against the refrigerant leakage, such as automatically activating the protection module for the refrigerant leakage for refrigerant leakage protection. In addition, since the performance parameters of the air conditioners and the operating status of the air conditioner under each operating parameter are different, if the specific exhaust temperature threshold is used, it may lead to inaccurate exhaust detection, which in turn affects the inaccurate refrigerant leakage detection. Therefore, in the embodiment, the exhaust temperature threshold can also be flexibly set for the air conditioner according to the current operating parameters, thereby improving the accuracy of exhaust detection. The operating parameters can be any parameter that can affect the exhaust temperature such as a compression ratio, a refrigerant flow rate, the opening of the electronic expansion valve and the like and are not limited in this embodiment.

In addition, in order to avoid damage to the compressor of the air conditioner, in this embodiment, when it is detected that the exhaust temperature of the air conditioner is greater than the preset exhaust temperature, the operating status of the air conditioner is adjusted. Specifically, in this embodiment, the air conditioner is first controlled to shut down, and after it is detected that the exhaust temperature of the air conditioner is within the normal range of the exhaust temperature, the air conditioner is controlled to start operation, thereby controlling the air conditioner to restart operation to avoid damage to the compressor of the air conditioner, and while the air conditioner is started and running, outdoor and indoor fans of the air conditioner are controlled to run at the highest speed, thereby completing the adjustment of the operating status of the air conditioner.

Then, after the outdoor and indoor fans of the air conditioner run at the highest speed for a certain time period, the target operating exhaust parameters are acquired when the air conditioner operates in the adjusted operating state, thereby avoiding fluctuations in the operating parameters such as the exhaust temperature caused by unstable operation of the air conditioner in the early stage of restarting the air conditioner, which in turn leads to inaccurate detection results. In addition, it should be noted that in this embodiment, by adjusting the operating status of the air conditioner, the exhaust temperature of the air conditioner and the ambient temperature of the environment where the air conditioner is located are changed. If it is detected again that the target operating exhaust parameters exceed the preset range of the exhaust parameter of the refrigerant leakage after the exhaust temperature of the air conditioner and the ambient temperature of the environment where the air conditioner is located are changed, it can be determined that the refrigerant leakage of the air conditioner occurs, and it is possible to reduce the misjudgment rate of the refrigerant leakage.

Furthermore, in this embodiment, when the target operating exhaust parameters of the air conditioner exceed the preset range of the exhaust parameter of the refrigerant leakage, the exhaust temperatures of the air conditioner at various moments during the preset time period is acquired, thereby determining the level of the refrigerant leakage by the exhaust temperature at various moments, and improving the accuracy of refrigerant leakage detection.

In addition, it should be noted that the above target operating exhaust parameters refer to the exhaust temperature of the compressor and the running current of the air conditioner. In this embodiment, the exhaust temperature of the compressor and the running current of the air conditioner are detected to detect whether the air conditioner needs to trigger the refrigerant leakage detection function. In other words, in this embodiment, when it is detected that the exhaust temperature is greater than the exhaust temperature threshold and the running current is lower than the running current threshold, i.e., exceeding the above-mentioned preset range of the exhaust parameter of the refrigerant leakage, it indicates that the air conditioner is operating abnormally, and it is determined that there is the refrigerant leakage in the air conditioner. That is, the air conditioner needs to trigger the refrigerant leak detection function. Otherwise, it indicates that the air conditioner is operating normally, and it is determined that the air conditioner does not need to trigger the refrigerant leak detection function.

When it is detected that the air conditioner needs to trigger the refrigerant leakage detection function, a preset detection process for the refrigerant leakage is executed, that is, the exhaust temperature at various moments during the preset time period is first acquired, and the preset detection process for the refrigerant leakage is completed based on the exhaust temperature at various moments.

In this embodiment, when acquiring the exhaust temperature at various moments, a timing acquisition method is adopted. The timing can be started after it is detected that the above parameters exceed the preset range of the exhaust parameter of the refrigerant leakage. In addition, the timing can also be started after it is detected that the exhaust temperature is greater than the preset exhaust temperature. For example, after it is detected that the exhaust temperature is greater than the preset exhaust temperature, the exhaust temperature of the compressor and the running current of the air conditioner are detected every one second. After it is detected that the exhaust temperature is greater than the exhaust temperature threshold and the running current is lower than the running current threshold, the refrigerant leakage detection function is triggered, and the current exhaust temperature of the air conditioner is continue to acquire. Accumulation of the timing continues, for example, the i-th second, and then acquire the exhaust temperature at the (i+1)th second, (i+2)th second, and so on. The time interval for timing acquisition can be any time, and are not limit in this embodiment.

The first determination module 20 is configured to determine the at least two extreme values of the exhaust temperature of the air conditioner and the exhaust moments corresponding to the at least two extreme values of the exhaust temperature according to the exhaust temperature at various moments.

The second acquisition module 30 is configured to acquire the exhaust period of the air conditioner according to the exhaust moment.

Specifically, the above at least two extreme values of the exhaust temperature refers to the highest exhaust temperature or the lowest exhaust temperature during the fluctuation period of the exhaust temperature. For example, the exhaust temperature detected at the 152nd second is 123°C, the exhaust temperature detected at the 153rd second is 124°C, the exhaust temperature detected at 152s is 123°C, and the exhaust temperature detected at 152s is 122°C, 124°C is the highest exhaust temperature.

In this embodiment, after acquiring the exhaust temperature at various moments, the at least two extreme values of the exhaust temperature can be determined based on the exhaust difference value between the exhaust temperatures at two adjacent moments. For example, by determining the exhaust difference value between the exhaust temperature at the (i+1)th second and the exhaust temperature at the i-th second, it is possible to find the highest exhaust temperature or the lowest exhaust temperature and the exhaust moment corresponding to thereof. Specifically, after obtaining the exhaust temperature at various moments, if the exhaust difference value between the exhaust temperatures of two adjacent moments acquired for the first time is greater than zero, continue to acquire the exhaust difference value between the exhaust temperatures of the two subsequent adjacent moments until the exhaust difference value is equal to or less than zero, thus obtaining the highest exhaust temperature, and determining the exhaust moment corresponding to the highest exhaust temperature. If the exhaust difference value acquired for the first time is less than zero, continue to acquire the difference between the exhaust temperatures at two subsequent adjacent moments until the exhaust difference value is equal to or greater than zero, thus obtaining the lowest exhaust temperature, and determining the exhaust moment corresponding to the lowest exhaust temperature.

For ease of understanding, here is an example of the above steps. For example, after the exhaust temperature detected at the 152nd s is 123°C and the exhaust temperature detected at the 153rd s is 124°C, the exhaust difference value between the 153rd s and the 152nd s is calculated as 1°C. Next, the exhaust temperature detected at the 154th s is 126°C, and the exhaust difference value between the 154th s and the 153rd s is calculated as 2°C. Next, the exhaust temperature detected at the 155th s is 125°C, and the exhaust difference value between the 155th s and the 154th s is calculated as (-1)°C, which means that the highest exhaust temperature during the fluctuation period of the exhaust temperature is 126°C, and the exhaust moment corresponding to thereof is 154th s.

In addition, it should be noted that according to the invention, it is necessary to acquire at least two highest exhaust temperatures or lowest exhaust temperatures to acquire the exhaust period. Here, the highest exhaust temperature is described as an example. When the exhaust difference value between the exhaust temperatures is acquired for the first time is greater than zero, continue to acquire the exhaust difference value between the exhaust temperatures at two subsequent adjacent moments until the exhaust difference value is equal to or less than zero, thereby obtaining a first highest exhaust temperature, and determining a first exhaust moment corresponding to the first highest exhaust temperature. Next, it continues to execute the above steps repeatedly, that is, after obtaining the first highest exhaust temperature, continue to obtain the exhaust difference value between the exhaust temperatures of the two subsequent adjacent timings until a second highest exhaust temperature is obtained based on the exhaust difference value, and determine a second exhaust moment corresponding to the second highest exhaust temperature. In addition, it should be noted that the exhaust temperature is flexibly variable, thus the highest exhaust temperature and the lowest exhaust temperature in each exhaust period are not a fixed value. Therefore, in this embodiment, the temperature values of the first highest exhaust temperature and the second highest exhaust temperature may be the same, or may be different. Finally, a time difference value between the first exhaust moment and the second exhaust moment is calculated to obtain the exhaust period.

In addition, in this embodiment, in addition to determining the at least two extreme values of the exhaust temperature based on the exhaust difference value, an exhaust temperature trend curve of the air conditioner can also be generated based on the exhaust temperature at various moments, and the at least two extreme values of the exhaust temperature can be determined based on the exhaust temperature trend curve. Here is not described again in this embodiment.

The second determination module 40 is configured to determine whether there is the refrigerant leakage in the air conditioner based on the exhaust period.

According to the invention, the above exhaust period can be used to reduce false alarms of the refrigerant leakage, thereby improving the accuracy of the refrigerant leakage. Specifically, when it is detected that the exhaust period of the exhaust temperature is shorter than the preset exhaust period, it is determined that there is a first-level refrigerant leakage in the air conditioner. When it is detected that the exhaust period of the exhaust temperature is greater than or equal to the preset exhaust period, it is determined that there is a second-level refrigerant leakage in the air conditioner.

In addition, in this embodiment, if there is the second-level refrigerant leakage in the air conditioner, the operating parameters of the air conditioner can be adjusted to enable the air conditioner to still have a certain cooling or heating effect, so as to not affect the normal use of the air conditioner. If there is the first-level refrigerant leakage in the air conditioner, it is necessary to immediately control the compressor of the air conditioner to shut down so as to protect the compressor and other equipment. In addition, a refrigerant leakage prompt message can also be output to remind the user that a refrigerant leakage failure in the air conditioner occurs.

In this embodiment, according to the invention, after it is detected that the air conditioner needs to trigger the refrigerant leakage detection function, the exhaust temperature of the air conditioner at various moments is acquired to determine the at least two extreme values of the exhaust temperature of the air conditioner and the exhaust moments corresponding to thereof, thereby determining the exhaust period and detecting the refrigerant leakage based on the exhaust period. Therefore, the accurate exhaust period is obtained by determining the at least two extreme values of the exhaust temperature of the air conditioner and the exhaust moments corresponding to thereof, and it is possible to reduce the false alarms for refrigerant leakage based on the accurate exhaust period, thereby improving the detection accuracy of the refrigerant leakage.

In addition, the embodiments of the present invention also provide a compute -readable storage medium, on which a detection program for the refrigerant leakage is stored, and when the detection program for the refrigerant leakage is executed by a processor, the steps of the detection method for the refrigerant leakage as described above are implemented. Here is not described in detail.

Through the above description of the embodiments, those skilled in the art can clearly understand that the methods of the above embodiments can be implemented by means of software plus the necessary general hardware platform. Of course, it can also be implemented by hardware, but in many cases the former is a better implementation. Based on such understanding, the technical solution of the present invention can be embodied in the form of a software product that is essentially or contributes to the existing technology. A computer software product is stored in the storage medium (such as ROM/RAM, magnetic disk, optical disk) as mentioned above, comprising several instructions to cause a terminal device to execute the methods described in various embodiments of the present invention.

## Claims

1. A refrigerant leakage detection method comprising:
(S1) acquiring an exhaust temperature and a target operating exhaust parameter of an air conditioner;
(S2) determining whether the acquired exhaust temperature of the air conditioner exceeds a preset exhaust temperature and whether the target operating exhaust parameter of the air conditioner exceeds a preset range of an exhaust parameter of refrigerant leakage;
(S3) in response to the result of step S2 being positive: acquiring the exhaust temperature of the air conditioner at various moments during a preset time period;
characterised that the method further comprises:
(S4) continuing to acquire the exhaust temperature until at least two extreme values of the exhaust temperature and exhaust moments corresponding to these at least two extreme values of the exhaust temperature of the air conditioner based on the exhaust temperature at the various moments have been determined;
(S5) acquiring an exhaust period of the air conditioner as time difference values between the at least two exhaust moments; and
(S6) determining whether there is a refrigerant leakage in the air conditioner based on the exhaust period.

2. The refrigerant leakage detection method according to claim 1, wherein the step of (S4) continuing to acquire the exhaust temperature until at least two extreme values of the exhaust temperature and exhaust moments corresponding to these at least two extreme values of the exhaust temperature of the air conditioner based on the exhaust temperature at the various moments have been determined comprises:
determining an exhaust difference value between the exhaust temperatures at two adjacent moments; and
repeating the step of determining the exhaust difference value between the exhaust temperatures at two adjacent moments until at least two extreme values of the exhaust temperature of the air conditioner have been determined based on the determined exhaust difference values.

3. The refrigerant leakage detection method according to claim 1, wherein the step of (S6) determining whether there is the refrigerant leakage in the air conditioner based on the exhaust period further comprises:
(S401) determining that there is a first-level refrigerant leakage in the air conditioner, in response to that the exhaust period of the exhaust temperature is less than a preset exhaust period; and
(S402) determining that there is a second-level refrigerant leakage in the air conditioner, in response to that the exhaust period of the exhaust temperature is greater than or equal to the preset exhaust period.

4. The refrigerant leakage detection method according to claim 3, wherein after the step of (S402) determining that there is the second-level refrigerant leakage in the air conditioner, the method further comprises:
(S50) decreasing an operating frequency of the compressor of the air conditioner and increasing an opening of an outdoor electronic expansion valve of the air conditioner.

5. The refrigerant leakage detection method according to claim 4, wherein after the step of (S50) decreasing the operating frequency of the compressor of the air conditioner and increasing the opening of the outdoor electronic expansion valve of the air conditioner, the method further comprises:
controlling the air conditioner to restart, and acquiring the target operating exhaust parameter of the air conditioner; and
controlling the compressor of the air conditioner to stop and outputting a refrigerant leakage prompt message, in response to detecting that the target operating exhaust parameter exceed a preset parameter range of refrigerant leakage detection.

6. The refrigerant leak detection method according to claim 5, wherein after the step of acquiring the target operating exhaust parameter of the air conditioner, the method further comprises:
decreasing the operating frequency of the compressor of the air conditioner and increasing the opening of the outdoor electronic expansion valve of the air conditioner, in response to detecting that the target operating exhaust parameter does not exceed the preset parameter range of the refrigerant leakage detection.

7. The refrigerant leakage detection method according to claim 3, wherein after the step of (S401) determining that there is the first-level refrigerant leakage in the air conditioner, the method further comprises:
(S60) controlling the compressor of the air conditioner to stop and outputting a refrigerant leakage prompt message.

8. The refrigerant leakage detection method according to any one of claims 1 to 7, wherein the steps of (S1) acquiring an exhaust temperature and a target operating exhaust parameter of an air conditioner and (S2) determining whether the acquired exhaust temperature of the air conditioner exceeds a preset exhaust temperature and whether the target operating exhaust parameter of the air conditioner exceeds a preset range of an exhaust parameter of refrigerant leakage comprise:
adjusting an operation state of the air conditioner and acquiring the target operating exhaust parameter of the air conditioner operated in an adjusted operation state after adjustment, in response to that the exhaust temperature of the air conditioner is greater than the preset exhaust temperature; and
acquiring the exhaust temperature of the air conditioner at the various moments during the preset time period, in response to that the target operating exhaust parameter of the air conditioner exceeds the preset range of the exhaust parameter of refrigerant leakage.

9. A refrigerant leakage detection device comprising:
a first acquisition module (10), configured to acquire an exhaust temperature and a target operating exhaust parameter of an air conditioner,
the first acquisition module (10) configured to acquire the exhaust temperature of the air conditioner at various moments during a preset time period in response to the exhaust temperature being greater than a preset exhaust temperature and the target operating exhaust parameter of the air conditioner exceeding a preset range of an exhaust parameter of refrigerant leakage; and
a first determination module (20);
**characterized in that**:
the first acquisition module (10) is configured to continue to acquire the exhaust temperature until at least two extreme values of the exhaust temperature and exhaust moments corresponding to these at least two extreme values of the exhaust temperature of the air conditioner based on the exhaust temperature at the various moments have been determined by the first determination module (20);
wherein the refrigerant detection leakage device further comprises:
a second acquisition module (30), configured to acquire an exhaust period of the air conditioner as time difference values between the at least two exhaust moments; and
a second determination module (40), configured to determine whether there is a refrigerant leakage in the air conditioner based on the exhaust period.

10. An air conditioner comprising a refrigerant leakage detection device according to claim 9 which comprises:
a processor (1001), a memory (1005) and a refrigerant leakage detection program stored in the memory (1005), wherein the steps of the refrigerant leakage detection method according to any one of claims 1 to 8 are implemented when the refrigerant leakage detection program is executed by the processor (1001).

11. A computer-readable storage medium comprising a refrigerant leakage detection program which, when executed by a processor (1001), causes the processor (1001) to carry out the steps of the refrigerant leakage detection method according to any one of claims 1 to 8.

## Patentansprüche

1. Verfahren zur Erkennung von Kältemittelleckagen, umfassend:
(S1) Erfassen einer Ablufttemperatur und eines Zielbetriebsabluftparameters einer Klimaanlage;
(S2) Bestimmen, ob die erfasste Ablufttemperatur der Klimaanlage eine voreingestellte Ablufttemperatur überschreitet, und ob der Zielbetriebsabluftparameter der Klimaanlage einen voreingestellten Bereich eines Abluftparameters von Kältemittelleckagen überschreitet;
(S3) als Reaktion darauf, dass das Ergebnis von Schritt S2 positiv ist: Erfassen der Ablufttemperatur der Klimaanlage zu verschiedenen Zeitpunkten während eines voreingestellten Zeitraums;
**dadurch gekennzeichnet, dass** das Verfahren ferner Folgendes umfasst:
(S4) Fortführen des Erfassens der Ablufttemperatur, bis mindestens zwei Extremwerte der Ablufttemperatur und Abluftzeitpunkte, die diesen mindestens zwei Extremwerten der Ablufttemperatur der Klimaanlage entsprechen, auf der Grundlage der Ablufttemperatur zu den verschiedenen Zeitpunkten bestimmt worden sind ;
(S5) Erfassen einer Abluftdauer der Klimaanlage als Zeitdifferenzwerte zwischen den mindestens zwei Abluftzeitpunkten; und
(S6) Bestimmen, ob ein Kältemittelleck in der Klimaanlage vorliegt, basierend auf der Abluftdauer.

2. Verfahren zur Erkennung von Kältemittelleckagen gemäß Anspruch 1, wobei der Schritt (S4), bei dem die Ablufttemperatur so lange erfasst wird, bis mindestens zwei Extremwerte der Ablufttemperatur und Abluftzeitpunkte, die diesen mindestens zwei Extremwerten der Ablufttemperatur der Klimaanlage entsprechen, auf der Grundlage der Ablufttemperatur zu verschiedenen Zeitpunkten bestimmt wurden, Folgendes umfasst:
Bestimmen eines Abluftdifferenzwerts zwischen den Ablufttemperaturen zu zwei benachbarten Zeitpunkten; und
Wiederholen des Schritts des Bestimmens des Abluftdifferenzwerts zwischen den Ablufttemperaturen zu zwei benachbarten Zeitpunkten, bis mindestens zwei Extremwerte der Ablufttemperatur der Klimaanlage auf der Grundlage der bestimmten Abluftdifferenzwerte bestimmt worden sind.

3. Verfahren zur Erkennung von Kältemittelleckagen gemäß Anspruch 1, wobei der Schritt (S6) des Bestimmens, ob in der Klimaanlage ein Kältemittelleck vorliegt, auf der Grundlage der Abluftdauer ferner Folgendes umfasst:
(S401) Bestimmen, dass ein Kältemittelleck der ersten Stufe in der Klimaanlage vorliegt, als Reaktion darauf, dass die Abluftdauer der Ablufttemperatur kleiner ist als eine voreingestellte Abluftdauer; und
(S402) Bestimmen, dass ein Kältemittelleck der zweiten Stufe in der Klimaanlage vorliegt, als Reaktion darauf, dass die Abluftdauer der Ablufttemperatur größer oder gleich der voreingestellten Abluftdauer ist.

4. Verfahren zur Erkennung von Kältemittelleckagen gemäß Anspruch 3, wobei das Verfahren nach dem Schritt (S402) des Bestimmens, dass ein Kältemittelleck der zweiten Stufe in der Klimaanlage vorliegt, ferner Folgendes umfasst:
(S50) Verringern einer Betriebsfrequenz des Kompressors der Klimaanlage und Erhöhen einer Öffnung eines elektronischen Außen-Expansionsventils der Klimaanlage.

5. Verfahren zur Erkennung von Kältemittelleckagen gemäß Anspruch 4, wobei das Verfahren nach dem Schritt (S50) des Verringerns der Betriebsfrequenz des Kompressors der Klimaanlage und des Erhöhens der Öffnung des elektronischen Außen-Expansionsventils der Klimaanlage ferner Folgendes umfasst:
Steuern der Klimaanlage, so dass sie neustartet, und Erfassen des Zielbetriebsabluftparameters der Klimaanlage; und
Steuern des Kompressors der Klimaanlage, so dass er stoppt und Ausgeben einer Kältemittelleck-Eingabeaufforderung, als Reaktion darauf, dass bestimmt wird, dass der Zielbetriebsabluftparameter einen voreingestellten Parameterbereich der Kältemittelleckageerkennung überschreitet.

6. Verfahren zur Erkennung von Kältemittelleckagen gemäß Anspruch 5, wobei das Verfahren nach dem Schritt des Erfassens des Zielbetriebsabluftparameters der Klimaanlage ferner Folgendes umfasst:
Verringern der Betriebsfrequenz des Kompressors der Klimaanlage und Erhöhen der Öffnung des elektronischen Außen-Expansionsventils der Klimaanlage als Reaktion auf das Bestimmen, dass der Zielbetriebsabluftparameter den voreingestellten Parameterbereich für die Kältemittelleckageerkennung nicht überschreitet.

7. Verfahren zur Erkennung von Kältemittelleckagen gemäß Anspruch 3, wobei das Verfahren nach dem Schritt (S401) der Bestimmung, dass in der Klimaanlage eine Kältemittelleckage der ersten Stufe vorliegt, ferner Folgendes umfasst:
(S60) Steuern des Kompressors der Klimaanlage, so dass er stoppt und Ausgeben einer Kältemittelleck-Eingabeaufforderung.

8. Verfahren zur Erkennung von Kältemittelleckagen gemäß einem der Ansprüche 1 bis 7, wobei die Schritte (S1) des Erfassens einer Ablufttemperatur und eines Zielbetriebsabluftparameters einer Klimaanlage und (S2) des Bestimmens, ob die erfasste Ablufttemperatur der Klimaanlage eine voreingestellte Ablufttemperatur überschreitet, und ob der Zielbetriebsabluftparameter der Klimaanlage einen voreingestellten Bereich eines Abluftparameters von Kältemittelleckagen überschreitet, Folgendes umfassen:
Anpassen eines Betriebszustands der Klimaanlage und Erfassen des Zielbetriebsabluftparameters der Klimaanlage, die in einem angepassten Betriebszustand nach der Anpassung betrieben wird, als Reaktion darauf, dass die Ablufttemperatur der Klimaanlage größer ist als die voreingestellte Ablufttemperatur; und
Erfassen der Ablufttemperatur der Klimaanlage zu verschiedenen Zeitpunkten während des voreingestellten Zeitraums, als Reaktion darauf, dass der Zielbetriebsabluftparameter der Klimaanlage den voreingestellten Bereich des Abluftparameters von Kältemittelleckagen überschreitet.

9. Vorrichtung zur Erkennung von Kältemittelleckagen, umfassend:
ein erstes Erfassungsmodul (10), das so konfiguriert ist, dass es eine Ablufttemperatur und einen Zielbetriebsabluftparameter einer Klimaanlage erfasst,
das erste Erfassungsmodul (10), das so konfiguriert ist, dass es die Ablufttemperatur der Klimaanlage zu verschiedenen Zeitpunkten während eines voreingestellten Zeitraums erfasst, als Reaktion darauf, dass die Ablufttemperatur größer ist als eine voreingestellte Ablufttemperatur und der Zielbetriebsabluftparameter der Klimaanlage einen voreingestellten Bereich eines Abluftparameters von Kältemittelleckagen überschreitet; und
ein erstes Bestimmungsmodul (20);
**dadurch gekennzeichnet, dass**:
das erste Erfassungsmodul (10) so konfiguriert ist, dass es die Ablufttemperatur so lange erfasst, bis mindestens zwei Extremwerte der Ablufttemperatur und Abluftzeitpunkte, die diesen mindestens zwei Extremwerten der Ablufttemperatur der Klimaanlage entsprechen, auf der Grundlage der Ablufttemperatur zu den verschiedenen Zeitpunkten durch das erste Bestimmungsmodul (20) bestimmt worden sind;
wobei die Vorrichtung zur Erkennung von Kältemittelleckagen ferner Folgendes umfasst:
ein zweites Erfassungsmodul (30), das so konfiguriert ist, dass es eine Abluftdauer der Klimaanlage als Zeitdifferenzwerte zwischen den mindestens zwei Abluftzeitpunkten erfasst; und
ein zweites Bestimmungsmodul (40), das so konfiguriert ist, dass es auf der Grundlage der Abluftdauer bestimmt, ob ein Kältemittelleck in der Klimaanlage vorliegt.

10. Klimaanlage umfassend eine Vorrichtung zur Erkennung von Kältemittelleckagen gemäß Anspruch 9, die Folgendes umfasst:
einen Prozessor (1001), einen Speicher (1005) und ein im Speicher (1005) gespeichertes Programm zur Erkennung von Kältemittelleckagen, wobei die Schritte des Verfahrens zur Erkennung von Kältemittelleckagen gemäß einem der Ansprüche 1 bis 8 ausgeführt werden, wenn das Programm zur Erkennung von Kältemittelleckagen vom Prozessor (1001) ausgeführt wird.

11. Computerlesbares Speichermedium umfassend ein Programm zur Erkennung von Kältemittelleckagen, das, wenn es von einem Prozessor (1001) ausgeführt wird, den Prozessor (1001) veranlasst, die Schritte des Verfahrens zur Erkennung von Kältemittelleckagen gemäß einem der Ansprüche 1 bis 8 auszuführen.

## Revendications

1. Procédé de détection de fuite de réfrigérant, comprenant :
(S1) l'acquisition d'une température d'échappement et d'un paramètre d'échappement de fonctionnement cible d'un climatiseur ;
(S2) la détermination de savoir si la température d'échappement acquise du climatiseur dépasse une température d'échappement prédéfinie et si le paramètre d'échappement de fonctionnement cible du climatiseur dépasse une plage prédéfinie d'un paramètre d'échappement de fuite de réfrigérant ;
(S3) en réponse au fait que le résultat de l'étape S2 est positif : l'acquisition de la température d'échappement du climatiseur à divers instants pendant une période de temps prédéfinie ;
**caractérisé en ce que** le procédé comprend en outre :
(S4) la poursuite de l'acquisition de la température d'échappement jusqu'à ce qu'au moins deux valeurs extrêmes de la température d'échappement et des instants d'échappement correspondant à ces au moins deux valeurs extrêmes de la température d'échappement du climatiseur aient été déterminés sur la base de la température d'échappement aux divers instants ;
(S5) l'acquisition d'une période d'échappement du climatiseur en tant que valeurs de différence de temps entre les au moins deux instants d'échappement ; et
(S6) la détermination de savoir s'il existe une fuite de réfrigérant dans le climatiseur sur la base de la période d'échappement.

2. Procédé de détection de fuite de réfrigérant selon la revendication 1, dans lequel l'étape (S4) de poursuite de l'acquisition de la température d'échappement jusqu'à ce qu'au moins deux valeurs extrêmes de la température d'échappement et des instants d'échappement correspondant à ces au moins deux valeurs extrêmes de la température d'échappement du climatiseur aient été déterminés sur la base de la température d'échappement aux divers instants comprend :
la détermination d'une valeur de différence d'échappement entre les températures d'échappement à deux instants adjacents ; et
la répétition de l'étape consistant à déterminer la valeur de différence d'échappement entre les températures d'échappement à deux instants adjacents jusqu'à ce qu'au moins deux valeurs extrêmes de la température d'échappement du climatiseur aient été déterminées sur la base des valeurs de différence d'échappement déterminées.

3. Procédé de détection de fuite de réfrigérant selon la revendication 1, dans lequel l'étape (S6) de détermination de savoir s'il existe la fuite de réfrigérant dans le climatiseur sur la base de la période d'échappement comprend en outre :
(S401) la détermination qu'il existe une fuite de réfrigérant de premier niveau dans le climatiseur, en réponse au fait que la période d'échappement de la température d'échappement est inférieure à une période d'échappement prédéfinie ; et
(S402) la détermination qu'il existe une fuite de réfrigérant de second niveau dans le climatiseur, en réponse au fait que la période d'échappement de la température d'échappement est supérieure ou égale à la période d'échappement prédéfinie.

4. Procédé de détection de fuite de réfrigérant selon la revendication 3, dans lequel, après l'étape (S402) de détermination qu'il existe la fuite de réfrigérant de second niveau dans le climatiseur, le procédé comprend en outre :
(S50) la diminution d'une fréquence de fonctionnement du compresseur du climatiseur et l'augmentation d'une ouverture d'une vanne de détente électronique extérieure du climatiseur.

5. Procédé de détection de fuite de réfrigérant selon la revendication 4, dans lequel, après l'étape (S50) de diminution de la fréquence de fonctionnement du compresseur du climatiseur et d'augmentation de l'ouverture de la vanne de détente électronique extérieure du climatiseur, le procédé comprend en outre :
la commande du redémarrage du climatiseur, et l'acquisition du paramètre d'échappement de fonctionnement cible du climatiseur ; et
la commande de l'arrêt du compresseur du climatiseur et la sortie d'un message d'invite de fuite de réfrigérant, en réponse à la détection que le paramètre d'échappement de fonctionnement cible dépasse une plage de paramètres prédéfinie de détection de fuite de réfrigérant.

6. Procédé de détection de fuite de réfrigérant selon la revendication 5, dans lequel, après l'étape d'acquisition du paramètre d'échappement de fonctionnement cible du climatiseur, le procédé comprend en outre :
la diminution de la fréquence de fonctionnement du compresseur du climatiseur et l'augmentation de l'ouverture de la vanne de détente électronique extérieure du climatiseur, en réponse à la détection que le paramètre d'échappement de fonctionnement cible ne dépasse pas la plage de paramètres prédéfinie de la détection de fuite de réfrigérant.

7. Procédé de détection de fuite de réfrigérant selon la revendication 3, dans lequel, après l'étape (S401) de détermination qu'il existe la fuite de réfrigérant de premier niveau dans le climatiseur, le procédé comprend en outre :
(S60) la commande de l'arrêt du compresseur du climatiseur et la sortie d'un message d'invite de fuite de réfrigérant.

8. Procédé de détection de fuite de réfrigérant selon l'une quelconque des revendications 1 à 7, dans lequel les étapes (S1) d'acquisition d'une température d'échappement et d'un paramètre d'échappement de fonctionnement cible d'un climatiseur et (S2) de détermination de savoir si la température d'échappement acquise du climatiseur dépasse une température d'échappement prédéfinie et si le paramètre d'échappement de fonctionnement cible du climatiseur dépasse une plage prédéfinie d'un paramètre d'échappement de fuite de réfrigérant comprennent :
l'ajustement d'un état de fonctionnement du climatiseur et l'acquisition du paramètre d'échappement de fonctionnement cible du climatiseur fonctionnant dans un état de fonctionnement ajusté après ajustement, en réponse au fait que la température d'échappement du climatiseur est supérieure à la température d'échappement prédéfinie ; et
l'acquisition de la température d'échappement du climatiseur aux divers instants pendant la période de temps prédéfinie, en réponse au fait que le paramètre d'échappement de fonctionnement cible du climatiseur dépasse la plage prédéfinie du paramètre d'échappement de fuite de réfrigérant.

9. Dispositif de détection de fuite de réfrigérant, comprenant :
un premier module d'acquisition (10), configuré pour acquérir une température d'échappement et un paramètre d'échappement de fonctionnement cible d'un climatiseur,
le premier module d'acquisition (10) étant configuré pour acquérir la température d'échappement du climatiseur à divers instants pendant une période de temps prédéfinie en réponse au fait que la température d'échappement est supérieure à une température d'échappement prédéfinie et que le paramètre d'échappement de fonctionnement cible du climatiseur dépasse une plage prédéfinie d'un paramètre d'échappement de fuite de réfrigérant ; et,
un premier module de détermination (20) ;
**caractérisé en ce que** :
le premier module d'acquisition (10) est configuré pour continuer à acquérir la température d'échappement jusqu'à ce qu'au moins deux valeurs extrêmes de la température d'échappement et des instants d'échappement correspondant à ces au moins deux valeurs extrêmes de la température d'échappement du climatiseur sur la base de la température d'échappement aux divers instants aient été déterminés par le premier module de détermination (20) ;
dans lequel le dispositif de détection de fuite de réfrigérant comprend en outre :
un second module d'acquisition (30), configuré pour acquérir une période d'échappement du climatiseur, à savoir des valeurs de différence de temps entre les au moins deux instants d'échappement ; et
un second module de détermination (40), configuré pour déterminer s'il existe une fuite de réfrigérant dans le climatiseur sur la base de la période d'échappement.

10. Climatiseur comprenant un dispositif de détection de fuite de réfrigérant selon la revendication 9, lequel comprend :
un processeur (1001), une mémoire (1005) et un programme de détection de fuite de réfrigérant stocké dans la mémoire (1005), dans lequel les étapes du procédé de détection de fuite de réfrigérant selon l'une quelconque des revendications 1 à 8 sont mises en œuvre lorsque le programme de détection de fuite de réfrigérant est exécuté par le processeur (1001).

11. Support de stockage lisible par ordinateur comprenant un programme de détection de fuite de réfrigérant qui, lorsqu'il est exécuté par un processeur (1001), amène le processeur (1001) à exécuter les étapes du procédé de détection de fuite de réfrigérant selon l'une quelconque des revendications 1 à 8.
